(19) Europäisches Patentamt / European Patent Office / Office européen des brevets

(11) **EP 2 607 625 B1**

(12) **EUROPÄISCHE PATENTSCHRIFT**

(45) Veröffentlichungstag und Bekanntmachung des Hinweises auf die Patenterteilung:
**08.09.2021   Patentblatt 2021/36**

(51) Int Cl.:
**F01D 5/14** *(2006.01)*     **F01D 5/22** *(2006.01)*
**F01D 9/04** *(2006.01)*

(21) Anmeldenummer: **11194433.6**

(22) Anmeldetag: **20.12.2011**

(54) **TURBOMASCHINE UND TURBOMASCHINENSTUFE**

TURBOMACHINE AND STAGE OF TURBOMACHINE

TURBOMACHINE ET ÉTAGE DE TURBOMACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.06.2013   Patentblatt 2013/26**

(73) Patentinhaber: **MTU Aero Engines AG**
**80995 München (DE)**

(72) Erfinder:
• **Engel, Karl**
**85221 Dachau (DE)**
• **Gier, Jochen**
**85757 Karsfeld (DE)**
• **Mahle, Inga**
**77880 Sasbach (DE)**
• **Körber, Kai**
**85757 Karlsfeld (DE)**

(56) Entgegenhaltungen:
EP-A1- 1 067 273       EP-A1- 1 515 000
EP-A1- 2 136 033       EP-A1- 2 369 138
EP-A2- 2 003 292       WO-A1-2004/113685
US-A1- 2007 128 021

• **None**

**Beschreibung**

Die vorliegende Erfindung betrifft eine Turbomaschine, insbesondere eine Gasturbine, vorzugsweise eine Flugtriebwerk-Gasturbine, mit wenigstens einer Turbomaschinenstufe, insbesondere einer Kompressor- oder Turbinenstufe, mit einem Leit- und einem Laufgitter, sowie eine solche Turbomaschinenstufe.

Eine Turbomaschinenstufe weist ein Laufgitter mit rotierenden Laufschaufeln sowie ein stromauf- und/oder -abwärts benachbartes Leitgitter auf. Die Laufschaufeln enden fußseitig in einer radial äußeren Schaufelplattform. Auch bei Leitschaufeln kann spitzenseitig eine radial äußere Schaufelplattform vorgesehen sein, etwa als Deckband.

Zwischen Leit- und Laufgitter ist ein Axialspalt ausgebildet. Bei rotierendem Laufgitter werden in diesem Druckgradienten induziert, die über den Umfang variieren und Sekundärströmungen verursachen. Beispielsweise kann ein rotierendes Turbinenlaufgitter auf seiner Druckseite Arbeitsfluid in den Axialspalt drücken und umgekehrt auf seiner Saugseite aus dem Spalt fördern, was zu einer Ausgleichsströmung führt. Dies verschlechtert den Wirkungsgrad der Turbomaschine.

Aus der EP 2 372 102 A2 ist eine Gasturbine mit deckbandfreien Laufschaufeln bekannt. Für radial innere Schaufelplattformen von Leit- und Laufschaufeln wird eine nicht-axialsymmetrische, insbesondere radial und/oder axial wellenförmige, Kontur vorgeschlagen.

Aus der EP 1 515 000 A1 ist eine Gasturbine bekannt, die eine Schaufelplattform umfasst, die eine über den Umfang in axialer und/oder radialer Richtung variierende Kontur aufweist Aufgabe der vorliegenden Erfindung ist es, den Wirkungsgrad einer Turbomaschine, insbesondere einer Flugtriebwerk-Gasturbine, zu verbessern.

Zur Lösung dieser Aufgabe ist eine Turbomaschinenstufe nach dem Oberbegriff des Anspruchs 1 durch dessen kennzeichnendes Merkmal weitergebildet. Anspruch 10 stellt eine Turbomaschine mit einer oder mehrerer solcher Turbomaschinenstufen unter Schutz, die Unteransprüche betreffen vorteilhafte Weiterbildungen.

Eine erfindungsgemäße Turbomaschinenstufe weist mehrere, vorzugsweise äquidistant über den Umfang verteilte, Laufschaufeln auf, die fuß- bzw. rotorseitig mit radial inneren Schaufelplattformen verbunden, insbesondere integral ausgebildet sind. Spitzen- bzw. gehäuseseitig können die Laufschaufeln mit radial äußeren Schaufelplattformen verbunden, insbesondere integral ausgebildet sein. Laufschaufeln können einzeln oder in Gruppen lösbar oder unlösbar an einem Rotor(teil) der Turbomaschine befestigt, insbesondere integral mit diesem ausgebildet sein.

Stromauf- und/oder -abwärts des durch diese Laufschaufeln gebildeten Laufgitters sind mehrere, vorzugsweise äquidistant über den Umfang verteilte, Leitschaufeln lösbar oder unlösbar an einem Gehäuse(teil) der Turbomaschine befestigt, insbesondere integral mit diesem ausgebildet. Hierzu sind die Leitschaufeln fuß- bzw. gehäuseseitig mit radial äußeren Schaufelplattformen verbunden, insbesondere integral ausgebildet. Spitzen- bzw. rotorseitig können die Leitschaufeln mit radial inneren Schaufelplattformen verbunden, insbesondere integral ausgebildet sein.

Leit- und/oder Laufschaufelplattformen in Umfangsrichtung benachbarter Schaufeln können miteinander lösbar oder unlösbar verbunden, insbesondere integral ausgebildet sein.

Bereiche der Schaufelplattformen, die sich axial zwischen Schaufelvorder- und -hinterkante und in Umfangsrichtung zwischen benachbarten Schaufeln erstrecken, definieren zusammen mit den Schaufeln selber sowie gegebenenfalls Gehäuse- bzw. Rotoroberflächenbereichen Strömungskanäle für das Arbeitsfluid und somit das Lauf- bzw. Leitgitter. Diese Bereiche der Schaufelplattformen werden daher im Folgenden als *Gitterbereiche* bezeichnet.

Die Schaufelplattformen können jedoch axial stromauf- und/oder abwärts über diese Gitterbereiche bzw. Schaufelnvorder- bzw. Hinterkanten hinausragen. Diese Bereiche der Schaufelplattformen begrenzen einen Axialspalt, der sich axial zwischen dem Leit- und dem Laufgitter erstreckt, sie werden daher im Folgenden zusammenfassend als *Spaltbereiche* der Schaufelplattformen bezeichnet.

Eine Schaufelplattform kann radial äußere Spaltbereiche mit mehreren Abschnitten aufweisen. Beispielsweise können die radial äußeren Schaufelplattformen eines Leit- oder Laufgitters einen oder mehrere radiale Absätze aufweisen, deren Mantelflächen den Axialspalt radial begrenzen und deren Stirnseiten den Axialspalt axial begrenzen. Bei solchen radial äußeren Spaltbereichen mit mehreren Abschnitten können sich die nachfolgenden Erläuterungen auf einen oder mehrere, insbesondere alle Abschnitte eines Spaltbereichs beziehen. Wenn also beispielsweise von einer Variation eines radial äußeren Spaltbereichs in radialer bzw. axialer Richtung die Rede ist, können zum Beispiel die Konturen einer oder mehrerer Mantelflächen in radialer Richtung bzw. einer oder mehrerer Stirnseiten in axialer Richtung variieren.

Wenn in einer bevorzugten Ausführung Laufschaufelspitzen oder -deckbänder, insbesondere dichtend, in einer gehäuseseitigen Aussparung angeordnet sind, kann der Gehäuseteil, in dem die Aussparung ausgebildet ist, einen radial äußeren Spaltbereich der Leitschaufelplattformen im Sinne der vorliegenden Erfindung bilden. Gleichermaßen kann eine radial äußere Laufschaufelplattform, die insbesondere in einer gehäuseseitigen Aussparung angeordnet sein kann, einen Spaltbereich im Sinne der vorliegenden Erfindung bilden.

Allgemein kann insbesondere ein radial außen mit wenigstens einer Leit- oder Laufschaufel verbundenes oder integrales Bauteil, dessen Kontur den Axialspalt zwischen Lauf- und Leitgitter - gegebenenfalls zusammen mit weiteren Konturen - radial und/oder axial begrenzt, ein radial äußerer Spaltbereich einer Schaufelplattform im Sinne der vorliegenden Erfindung sein.

Erfindungsgemäß variiert eine Kontur eines oder mehrerer dieser Spaltbereiche über den Umfang gesehen in radialer Richtung. Zusätzlich kann eine Kontur eines oder mehrerer dieser Spaltbereiche über den Umfang gesehen auch in axialer Richtung variieren. Unter einer Variation in radialer Richtung wird in fachüblicher Weise insbesondere ein Außenradius R der Kontur verstanden, der in Polarkoordinaten mit dem Umfangswinkel φ um die Rotationsachse der Turbomaschinenstufe variiert, unter einer Variation in axialer Richtung entsprechend insbesondere eine axiale Koordinate X der Kontur, die mit dem Umfangswinkel variiert. Vorzugsweise variiert die Kontur periodisch, insbesondere sinusartig:

$$R(\varphi) = R_0 + \Delta R \times \sin(\Omega_R \times \varphi + \Phi_R)$$

und/oder

$$X(\varphi) = X_0 + \Delta X \times \sin(\Omega_x \times \varphi + \Phi_x),$$

wobei

$$\varphi \in [0°, 360°]; \; R_0, \Delta R, X_0, \Delta X, \Omega_R, \Omega_x, \Phi_R, \Phi_x = \text{const.}$$

oder auch asymmetrisch.

Wie vorstehend ausgeführt kann diese Variation, die nachfolgend auch als Welligkeit bezeichnet wird, ausschließlich in radialer Richtung, ausschließlich in axialer Richtung oder auch sowohl in axialer als auch radialer Richtung ausgebildet sein. Beispielsweise variiert die Kontur eines zylinderförmigen Spaltbereiches mit ebener Stirnseite und gewellter Mantelfläche ausschließlich in radialer Richtung, diejenige eines zylinderförmigen Spaltbereiches mit gewellter Stirnseite und ebener Mantelfläche ausschließlich in axialer Richtung und diejenige eines zylinderförmigen Spaltbereiches mit gewellter Stirnseite und gewellter Mantelfläche ebenso wie diejenige eines kegelförmigen Spaltbereiches mit gewellter Mantelfläche sowohl in axialer als auch radialer Richtung.

Die Welligkeit kann ausschließlich bei einem oder mehreren Spaltbereichen von radial äußeren Leitschaufelplattformen, ausschließlich bei einem oder mehreren Spaltbereichen von radial äußeren Laufschaufelplattformen oder auch sowohl bei einem oder mehreren Spaltbereichen von radial äußeren Leit- und Laufschaufelplattformen ausgebildet sein. In einer bevorzugten Weiterbildung kann eine Welligkeit zusätzlich bei einem oder mehreren Spaltbereichen von radial inneren Leitschaufelplattformen und/oder bei einem oder mehreren Spaltbereichen von radial inneren Laufschaufelplattformen ausgebildet sein.

In einer bevorzugten Ausführung kann eine Kontur eines Spaltbereiches einer Schaufelplattform von einem von dem Leit- und dem Laufgitter und eine dieser axial und/oder radial gegenüberliegende Kontur eines Spaltbereiches einer Schaufelplattform von dem anderen von dem Leit- und dem Laufgitter über den Umfang vorzugsweise gleichartig, insbesondere parallel oder mit einem Phasenversatz variieren, der bevorzugt wenigstens 45°, insbesondere wenigstens 90°, vorzugsweise wenigstens 135° beträgt und/oder bevorzugt höchstens 270°, insbesondere höchstens 210° und vorzugsweise höchstens 180° beträgt.

Wenn ein Spaltbereich zwei gegenüberliegende Konturen aufweist wie beispielsweise eine Innen- und eine Außenumfangsfläche eines Ringflansches wie insbesondere einer Deckbandverlängerung oder an einem Gehäuse, können diese beiden gegenüberliegenden Konturen über den Umfang variieren, vorzugsweise verschieden- oder gleichartig, insbesondere mit einem Phasenversatz, der bevorzugt wenigstens 45°, insbesondere wenigstens 90°, vorzugsweise wenigstens 135° beträgt und/oder bevorzugt höchstens 270°, insbesondere höchstens 210° und vorzugsweise höchstens 180° beträgt. Zusätzlich kann vorgesehen sein, dass bei gegenüberliegenden Konturen auch nur eine Kontur, bei einer ringflanschartigen Deckbandverlängerung vorzugsweise die radial innenliegende Kontur, variiert, während die andere über den Umfangs konstant ist. Erfindungsgemäß weist mindestens ein Spaltbereich zwei gegenüberliegende Konturen auf, wie beispielsweise eine Innen- und eine Außenumfangsfläche eines Ringflansches wie insbesondere einer Deckbandverlängerung oder an einem Gehäuse, wobei diese beiden gegenüberliegenden Konturen über den Umfang gleichartig und parallel variieren, so dass die Wandstärke dieses Spaltbereiches der Schaufelplattform konstant bleibt.

Allgemein kann eine gesamte Kontur eines Spaltbereiches, beispielsweise die gesamte Innenmantelfläche eines Ringflansches, über den Umfang variieren. Gleichermaßen ist es auch möglich, dass nur ein Teilabschnitt der Kontur eine Welligkeit aufweist, beispielsweise die Innenmantelfläche eines Ringflansches nur in einem oder mehreren axialen Abschnitten in radialer Richtung variiert oder eine Stirnfläche nur in einem oder mehreren radialen Abschnitten

EP 2 607 625 B1

in axialer Richtung variiert.

Eine radiale Variation einer Kontur eines Spaltbereichs einer Schaufelplattform eines Gitters kann in axialer Richtung konstant sein, so dass Wellentäler bzw. -spitzen parallel zur Rotationsachse der Turbomaschinenstufe ausgerichtet sind. Gleichermaßen kann eine radiale Variation einer Kontur eines Spaltbereichs einer Schaufelplattform eines Gitters auch in axialer Richtung variieren, so dass Wellentäler bzw. -spitzen schräg zur Rotationsachse verlaufen. Insbesondere kann ein Phasenversatz vorgesehen sein, der sich mit der axialen Position x, vorzugsweise linear, ändert:

$$R(\varphi, x) = R_0 + \Delta R \times \sin(\Omega_R \times \varphi + \Phi_R \times x)$$

Gleichermaßen kann eine axiale Variation einer Kontur eines Spaltbereichs einer Schaufelplattform eines Gitters in radialer Richtung konstant sein, so dass Wellentäler bzw. -spitzen senkrecht zur Rotationsachse der Turbomaschinenstufe ausgerichtet sind. Gleichermaßen kann eine axiale Variation einer Kontur eines Spaltbereichs einer Schaufelplattform eines Gitters auch in radialer Richtung variieren, so dass Wellentäler bzw. -spitzen schräg zur Rotationsachse geneigt sind. Auch hier kann insbesondere ein Phasenversatz vorgesehen sein, der sich mit der radialen Position r, vorzugsweise linear, ändert:

$$X(\varphi, r) = X_0 + \Delta X \times \sin(\Omega_x \times \varphi + \Phi_x \times r)$$

In einer bevorzugten Ausführung variiert zusätzlich zu wenigstens einem Spaltbereich auch der Gitterbereich der Schaufelplattform, wenigstens abschnittsweise, über den Umfang in einer der vorstehend erläuterten Arten. In einer vorteilhaften Weiterbildung geht dann ein Spaltbereich, dessen Kontur über den Umfang variiert, glatt in diesen Gitterbereich über, insbesondere derart, dass ein Wellental der Spaltbereichkontur in ein Wellental des Gitterbereichs übergeht, eine Wellenspitze der Spaltbereichkontur in eine Wellenspitze des Gitterbereichs. Unter einem glatten Übergang wird dabei in fachüblicher Weise insbesondere ein Übergang ohne scharfe Kanten oder Knicke bezeichnet, vorzugsweise mit einer stetigen Krümmung.

In einer bevorzugten Ausführung ist eine extremale, d.h. maximale oder minimale Erstreckung einer in radialer Richtung variierenden Kontur eines Spaltbereichs einer Schaufelplattform eines Gitters in Umfangsrichtung in der druckseitigen Hälfte des Segmentes zwischen zwei benachbarten Schaufelvorderkanten oder in der saugseitigen Hälfte des Segmentes zwischen zwei benachbarten Schaufelhinterkanten des Gitters angeordnet, um so die dort induzierten Druckerhöhungen bzw. -senken auszugleichen.

Allgemein definieren zwei Schaufelvorder- bzw. -hinterkanten eines Leit- oder Laufgitters zwischen sich ein Segment, welches sich in Umfangsrichtung erstreckt und durch die Kanalmitte in zwei Hälften geteilt wird. Die Segmenthälfte, die an die Druckseite der Schaufel angrenzt, wird als druckseitige Hälfte bezeichnet, die andere entsprechend als saugseitige Hälfte. Diese Hälften definieren über den Umfang einen Winkelbereich, in dem in der vorstehenden bevorzugten Ausführung eine extremale Erstreckung einer variierenden Kontur angeordnet ist. Da die variierende Kontur axial nicht auf Höhe dieses Segmentes selber liegt, kann dieses Segment parallel zu einer Verlängerung der Skelettlinie der Schaufel verschoben gedacht werden, um die extremale Erstreckung anzuordnen.

Vorzugsweise beträgt eine maximale Variation in radialer Richtung eines Spaltbereichs einer Schaufelplattform eines Gitters höchstens 50%, insbesondere höchstens 40% der Schaufelteilung des Gitters.

Zusätzlich oder alternativ zu der vorgenannten Anordnung extremaler radialer Erstreckungen über dem Umfang kann in einer bevorzugten Ausführung eine extremale, d.h. maximale oder minimal Erstreckung einer in axialer Richtung variierenden Kontur eines Spaltbereichs in Umfangsrichtung im Bereich einer Schaufelkante, insbesondere in Umfangsrichtung nicht weiter als 25% der Schaufelteilung von der Schaufelkante entfernt angeordnet sein. Auch hier wird wieder auf das Segment zwischen zwei benachbarten Schaufelkanten Bezug genommen, dessen Bogenlänge die Schaufelteilung definiert, und das parallel zur Verlängerung der Skelettlinie der Schaufel verschoben gedacht werden kann. Eine maximale Erstreckung in axialer Richtung einer Leitgitterschaufelplattform erstreckt sich vorzugsweise axial zum Laufgitter hin, eine maximale Erstreckung in axialer Richtung einer Laufgitterschaufelplattform entsprechend vorzugsweise axial zum Leitgitter hin.

Vorzugsweise beträgt eine maximale Variation in axialer Richtung eines Spaltbereichs einer Schaufelplattform eines Gitters höchstens 50°, insbesondere höchstens 40% der Schaufelteilung des Gitters.

Weitere Merkmale und Vorteile ergeben sich aus den Unteransprüchen und den Ausführungsbeispielen. Hierzu zeigt, teilweise schematisiert:

Fig. 1:     eine Abwicklung eines Teils einer nicht beanspruchten illustrativen Gasturbinenstufe mit einem Leit- und Laufgitter mit radial äußeren Schaufelplattformen, deren Spaltbereichskonturen in axialer Richtung über den Umfang variieren;

Fig. 2A, 2B: Meridianschnitte an unterschiedlichen Umfangspositionen einer erfindungsgemäßen Gasturbinenstufe mit einem Leit- und Laufgitter mit radial äußeren Schaufelplattformen, deren Spaltbereichskontur in radialer Richtung über den Umfang variiert; und

Fig. 3: einen Meridianschnitt einer erfindungsgemäßen Gasturbinenstufe mit einem Spaltbereich einer radial äußeren Leitschaufelplattform, in dem eine Aussparung zur Aufnahme von radial äußeren Laufschaufelplattformen ausgebildet ist, in Fig. 2 entsprechender Darstellung.

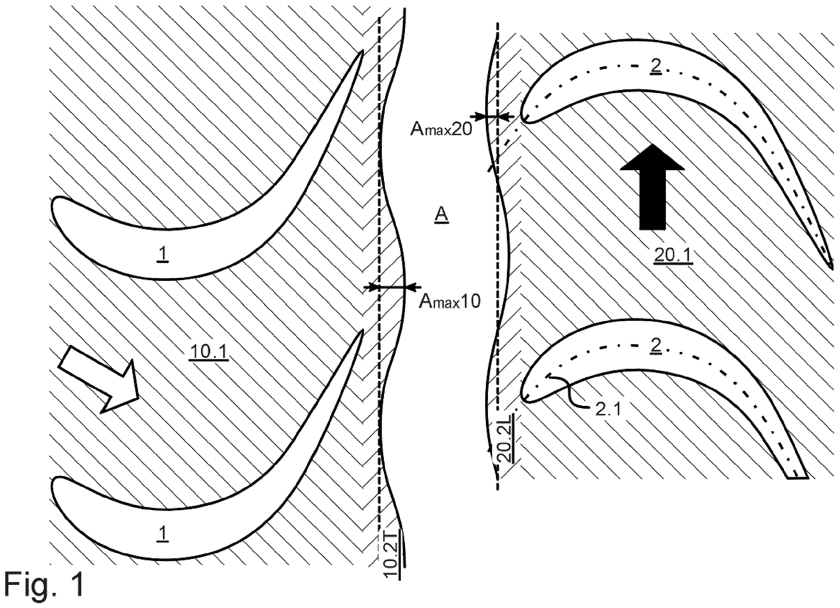

Fig. 1 zeigt von einer Drehachse aus, d.h. von radial innen gesehen, eine Abwicklung eines Teils einer Gasturbinenstufe mit einem feststehenden Leitgitter mit Leitschaufeln 1 und einem demgegenüber rotierenden Laufgitter mit Laufschaufeln 2. Die Rotation ist durch einen ausgefüllten vertikalen Pfeil angedeutet, die Durchströmung mit Arbeitsfluid durch einen leeren Pfeil im Bereich des Leitgitters. Diese Konfiguration ist rein exemplarisch zur Erläuterung, die vorliegende Erfindung kann gleichermaßen bei Turbinen- und Kompressorstufen eingesetzt werden, bei denen das Leitgitter stromauf und/oder stromab vom Laufgitter angeordnet ist.

Integral mit den Schaufeln 1, 2 sind radial äußere Schaufelplattformen ausgebildet, auf die man in Fig. 1 von oben, d.h. von der Drehachse der Gasturbinenstufe aus gesehen, blickt. Dabei kann jede Schaufel eine eigene Schaufelplattform aufweisen, es können auch mehrere oder alle Schaufeln eines Gitters mit derselben Schaufelplattform verbunden, insbesondere integral ausgebildet sein, die dann im Sinne der vorliegenden Erfindung gedanklich in einzelne, den einzelnen Schaufeln zugeordnete Schaufelplattformen aufgeteilt werden können. Daher sind in Fig. 1 keine Schaufelplattformgrenzen in Umfangsrichtung (vertikal in Fig. 1) dargestellt. Die radial äußeren Schaufelplattformen der Leitschaufeln 1 können beispielsweise ein, insbesondere integraler, Teil eines Gasturbinen(stufen)gehäuses oder an einem solchen befestigt sein. Die radial äußeren Schaufelplattformen der Laufschaufeln 2 können beispielsweise, insbesondere miteinander verbundene, Deckbänder sein.

Axial zwischen Vorder- (links in Fig. 1) und Hinterkante (rechts in Fig. 1) erstreckt sich jeweils ein Gitterbereich 10.1 bzw. 20.1 der Leit- bzw. Laufschaufelplattformen, der in Fig. 1 durch eine von links oben nach rechts unten fallende Schraffierung angedeutet ist.

Dieser geht jeweils in einen axial über die Leitschaufelhinter- bzw. Laufschaufelvorderkanten hinausragenden Schaufelplatten-Spaltbereich 10.2T bzw. 20.2L über, der in Fig. 1 durch eine von links unten nach rechts oben steigende Schraffierung angedeutet ist. Dieser Spaltbereich 10.2T bzw. 20.2L weist im Wesentlichen die Form eines radialen Absatzes auf, dessen den Gittern zugewandte Mantelfläche und dessen dem jeweils anderen Gitter zugewandte Stirnfläche einen radial inneren Axialspalt A zwischen Lauf- und Leitgitter radial bzw. axial begrenzen.

Die Kontur dieses Spaltbereiches 10.2T bzw. 20.2L, insbesondere dessen dem jeweils anderen Gitter zugewandte Stirnfläche, variiert in axialer Richtung, wie in der Abwicklung der Fig. 1 erkennbar, über den Umfang, d.h. in Fig. 1 in vertikaler Richtung. D.h., Erzeugende der Stirnfläche, die sich von der Rotationsachse der Turbomaschine zur Umfangskante des radialen Absatzes erstrecken, weisen unterschiedliche axiale Positionen auf, so dass die Stirnfläche in axialer Richtung an ausgewählten Umfangspositionen eine maximale axiale Erstreckung $A_{max}10$ bzw. $A_{max}20$ zum jeweils anderen Gitter hin aufweist, gemessen von einer axial am weitesten von dem jeweils anderen Gitter entfernten Erzeugenden. Die Erzeugenden können dabei senkrecht zur Rotationsachse der Turbomaschine oder gegenüber dieser um denselben oder einen in Umfangsrichtung variierenden Winkel geneigt sein. Im Ausführungsbeispiel stehen die Erzeugenden senkrecht zur Rotationsachse, ihre axiale Position variiert über den Umfang sinusartig so, dass maximalen axialen Erstreckungen $A_{max}20$ des Spaltbereichs 20.2L der Laufschaufelplattformen sich in Umfangsrichtung gesehen jeweils in der Nähe der Vorderkanten der Laufschaufeln 2 befinden, maximalen axialen Erstreckungen $A_{max}10$ des Spaltbereichs 10.2T der Leitschaufelplattformen jeweils in der Nähe der Hinterkanten der Leitschaufeln 1. Die maximalen Erstreckungen $A_{max}10$ bzw. $A_{max}20$ betragen jeweils 50% der jeweiligen Schaufelteilung.

Bezüglich der Position in Umfangsrichtung kann statt der parallel zur Rotationsachse verschobenen Position von Schaufelkanten, Kanalmitte und dergleichen auch auf eine hierzu mit der Verlängerung der Skelettlinie der jeweiligen Schaufel parallel verschobene Position Bezug genommen werden. Hierzu ist in Fig. 1 die Verlängerung der Skelettlinie 2.1 der Laufschaufeln 2 strichpunktiert eingezeichnet. Man erkennt, dass die maximalen axialen Erstreckungen $A_{max}20$ des Spaltbereichs 20.2L der Laufschaufelplattformen sich in Umfangsrichtung auch jeweils noch in der Nähe der solcherart verschobenen Positionen der Vorderkanten der Laufschaufeln 2 befinden.

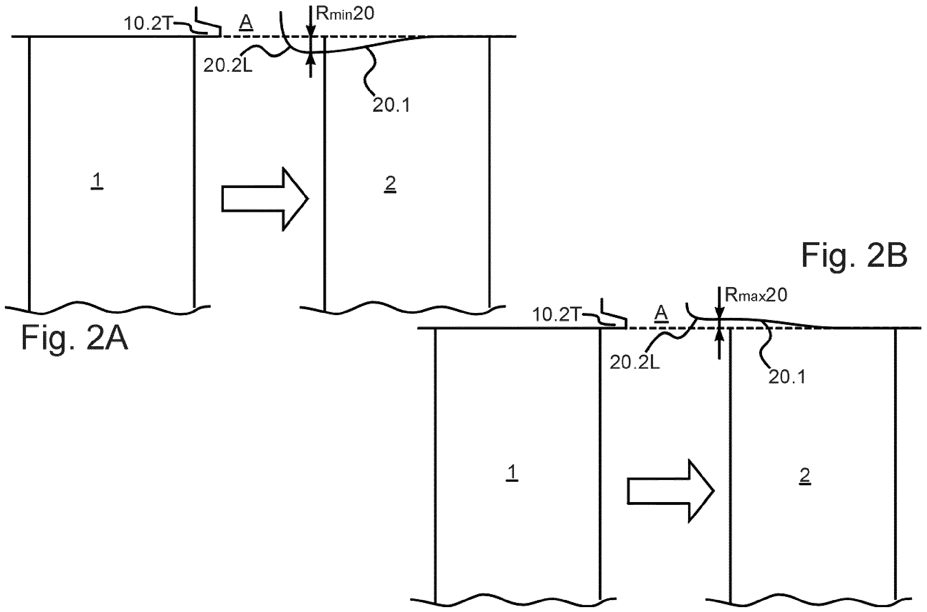

Fig. 2A, 2B zeigen jeweils einen Meridianschnitt an unterschiedlichen Umfangspositionen einer erfindungsgemäßen Gasturbinenstufe mit einem Leit- und Laufgitter mit radial äußeren Schaufelplattformen, deren Spaltbereichskontur in radialer Richtung über den Umfang variiert. Hierbei kann es sich insbesondere um die vorstehend mit Bezug auf Fig. 1 erläuterte Gasturbinenstufe handeln, so dass eine Welligkeit in radialer und axialer Richtung kombiniert sind. Daher wird nachfolgend auf die vorangehende Beschreibung Bezug genommen und nachfolgend nur auf die Aspekte der radialen Welligkeit eingegangen. Gleichermaßen ist es auch möglich, nur eine axiale Welligkeit als nicht beanspruchtes Beispiel wie vorstehend mit Bezug auf Fig. 1 erläutert, oder nur eine radiale Welligkeit, wie sie nachfolgend erläutert wird, vorzusehen.

Fig. 2A zeigt einen Meridianschnitt in einer Umfangsposition, in der die Mantelfläche des Spaltbereichs 20.2L eine minimale radiale Erstreckung radial nach außen, d.h. vom Rotor weg, aufweist, Fig. 2B entsprechend einen Meridianschnitt in einer Umfangsposition, in der die Mantelfläche des Spaltbereichs 20.2L eine maximale radiale Erstreckung aufweist. Man erkennt, dass die Mantelfläche des Spaltbereichs 20.2L in Umfangsrichtung sinusartig mit einer Amplitude $\Delta R = (R_{max}20 + R_{min}20)/2$ variiert. Dabei befindet sich die maximale positive Amplitude, d.h. die maximale radiale Erstreckung $R_{max}20$ radial nach außen, in Umfangsrichtung in der druckseitigen Hälfte des Segments zwischen zwei aufeinanderfolgenden Laufschaufelvorderkanten. Wiederum können hierbei die Positionen in Umfangsrichtung parallel zur Verlängerung der Skelettlinie bis zur jeweiligen axialen Position verschoben gedacht werden.

Man erkennt, dass die radiale Welligkeit nicht nur über den Umfang (vgl. Fig. 2A gegenüber Fig. 2B), sondern auch in axialer Richtung (vgl. horizontale Richtung in Fig. 2A, 2B) variiert, so dass die Wellentäler bzw. -spitzen schräg zur Rotationsachse geneigt sind. Insbesondere erkennt man in Fig. 2A das in Stromrichtung steigende Wellental $R_{min}20$, in Fig. 2B die in Stromrichtung abfallenden Wellenspitzen $R_{max}20$.

Man erkennt zudem, dass diese radiale Welligkeit des Spaltbereichs 20.2 glatt in eine entsprechende Welligkeit des Gitterbereichs 20.1 zwischen den Laufschaufeln 2 übergeht.

Obwohl nicht dargestellt, kann auch der dem Laufgitter zugewandte Spaltbereich 10.2T der Leitschaufelplattformen zusätzlich oder alternativ zu der oben erläuterten axialen Welligkeit (vgl.

Fig. 1) eine radiale Welligkeit aufweisen, wie sie vorstehend mit Bezug auf den Spaltbereich 20.2 der Laufschaufelplattformen erläutert wurde.

Man erkennt in Fig. 2, dass dieser Hinterkanten-Spaltbereich ringflanschförmig ausgebildet ist und somit zwei einander radial gegenüberliegende Oberflächen (oben, unten in Fig. 2) aufweist. Eine radiale Welligkeit ist auf beiden Oberflächen vorgesehen, wobei sie dann gleichartig variieren, so dass die Wandstärke des Ringflansches konstant bleibt.

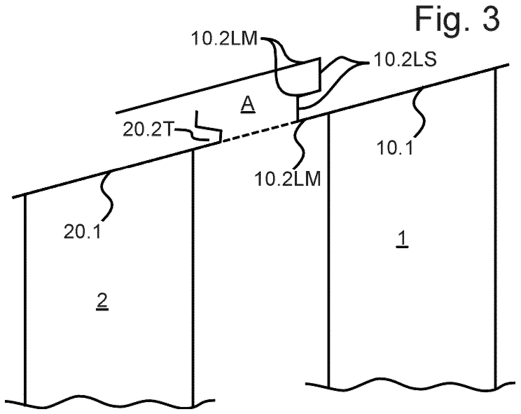

Fig. 3 zeigt in Fig. 2 entsprechender Darstellung einen Teil einer Gasturbinenstufe nach einer abgewandelten Ausführung der vorliegenden Erfindung. Einander entsprechende Elemente sind durch identische Bezugszeichen bezeichnet, so dass auf die vorstehenden Erläuterungen vollinhaltlich Bezug genommen und nachfolgend nur auf die Unterschiede in der Abwandlung eingegangen wird.

Zum Einen zeigt Fig. 3 die stromabwärtige Hinterkante einer Laufschaufel 2 und die stromaufwärtige Vorderkante einer nachfolgenden Leitschaufel 1. Entsprechend sind die radial äußeren Spaltbereiche mit 20.2T (für "Trailing edge" bzw. Hinterkante) und 10.2L (für "Leading edge" bzw. Vorderkante) bezeichnet, um exemplarisch aufzuzeigen, dass die Erläuterungen sich gleichermaßen auf Vorder- als auch Hinterkantenbereiche von Lauf- bzw. Leitschaufelplattformen beziehen können.

Zum Anderen sind die radial äußeren Schaufelplattformen gegen die Turbinenachse geneigt, um einen divergenten Strömungskanal darzustellen. Die Erläuterungen gelten in gleicher Weise auch für (nicht dargestellte) konvergente Strömungskanäle, insbesondere in Kompressor- bzw. Verdichterstufen.

Des Weiteren weist die radial äußere Laufschaufelplattform in Form eines Deckbandes in ihrem Hinterkanten-Spaltbereich 20.2T einen Ringflansch mit einander radial gegenüberliegenden Mantelflächen auf, wie dies vorstehend bereits mit Bezug auf den Hinterkanten-Spaltbereich 10.2T der Leitschaufel 1 der Fig. 1 erläutert wurde. Auch der Hinterkanten-Spaltbereich 20.2T weist auf seiner radial inneren (unten in Fig. 3) und äußeren Mantelfläche die gleiche Welligkeit auf.

Der Vorderkanten-Spaltbereich umfasst einen radial inneren Ringflansch in einer radial äußeren nutartigen Aussparung des Gasturbinengehäuses. Entsprechend weist der Vorderkanten-Spaltbereich drei Mantelflächen 10.2LM auf, die radial innere und die äußere Mantelfläche des Ringflansches und die Mantelfläche der Aussparung selber, sowie zwei Stirnflächen 10.LS, diejenige des Ringflansches und diejenige der Aussparung selber.

Jeder dieser Abschnitte 10.2LM, 10.2LS kann jeweils eine Welligkeit in radialer (10.2LM) bzw. axialer (10.2LS) Richtung aufweisen. Es können auch mehrere, insbesondere alle Abschnitte des Spaltbereichs eine Welligkeit aufweisen. Insofern soll die Abwandlung der Fig. 3 in einer Darstellung verschiedene Varianten aufzeigen, wo eine Kontur eines Spaltbereichs in radialer und/oder axialer Richtung über den Umfang variieren kann.

Bezugszeichenliste

1 **Leit**schaufel
2 **Lauf**schaufel
2.1 Verlängerung der Skelettlinie
10.**1**/20.**1 Gitter**bereich der radial äußeren Schaufelplattform des Leit/Laufgitters
10.2**T** Hinterkanten ("**T**railing edge")-Spaltbereich der radial äußeren Schaufelplattform des Leitgitters10.2L**M M**antelflächenabschnitt des Vorderkanten-Spaltbereich der radial äußeren Schaufelplattform des Leitgitters
10.2L**S S**tirnflächenabschnitt des Vorderkanten-Spaltbereich der radial äußeren Schaufelplattform des Leitgitters
20.**2**T Hinterkanten-**Spalt**bereich der radial äußeren Schaufelplattform des Leitgitters

20.2**L** Vorderkanten ("**L**eading edge")-Spaltbereich der radial äußeren Schaufelplattform des Leitgitters
A Axial spalt

**Patentansprüche**

1. Turbomaschinenstufe mit Leitschaufeln (1), radial inneren und radial äußeren Schaufelplattformen, die zusammen ein Leitgitter bilden, und mit Laufschaufeln (2), radial inneren und radial äußeren Schaufelplattformen, die zusammen ein dem Leitgitter benachbartes Laufgitter bilden, wobei radial äußere Schaufelplattformen Gitterbereiche (10.1, 20.1), die sich zwischen in Umfangsrichtung benachbarten Schaufeln erstrecken, aufweisen und wobei die radial äußeren Schaufelplattformen zudem Spaltbereiche (10.2L, 10.2T, 20.2L, 20.2T), die einen Axialspalt (A) radial und/oder axial begrenzen, der sich axial zwischen dem Leit- und dem Laufgitter erstreckt, aufweisen,
**dadurch gekennzeichnet, dass**
zwei radial gegenüberliegende Konturen eines dieser Spaltbereiche (10.2L, 20.2T) der radial äußeren Schaufelplattformen gleichartig und parallel in radialer Richtung über den Umfang variieren, so dass die Wandstärke dieses Spaltbereiches der Schaufelplattform konstant bleibt.

2. Turbomaschinenstufe nach Anspruch 1, **dadurch gekennzeichnet,** eine Kontur wenigstens eines der Spaltbereiche in radialer und/oder axialer Richtung über den Umfang, insbesondere periodisch, variiert.

3. Turbomaschinenstufe nach Anspruch 1 oder 2, **dadurch gekennzeichnet, dass** eine Kontur eines Spaltbereiches (10.2T) einer Schaufelplattform von einem von dem Leit- und dem Laufgitter und eine dieser axial und/oder radial gegenüberliegende Kontur eines Spaltbereiches (20.2L) einer Schaufelplattform von dem anderen von dem Leit- und dem Laufgitter über den Umfang, insbesondere gleichartig, variieren.

4. Turbomaschinenstufe nach einem der vorhergehenden Ansprüche, **dadurch gekennzeichnet, dass** eine radiale Variation einer Kontur eines Spaltbereichs einer Schaufelplattform eines Gitters in axialer Richtung variiert oder konstant ist.

5. Turbomaschinenstufe nach einem der vorhergehenden Ansprüche, **dadurch gekennzeichnet, dass** ein Spaltbereich (20.2L) einer Schaufelplattform eines Gitters, dessen Kontur über den Umfang variiert, glatt in den Gitterbereich (20.1) der Schaufelplattform übergeht, dessen Kontur in radialer und/oder axialer Richtung über den Umfang wenigstens abschnittsweise variiert.

6. Turbomaschinenstufe nach einem der vorhergehenden Ansprüche, **dadurch gekennzeichnet, dass** eine extremale Erstreckung ($R_{max}20$; $R_{min}20$) einer in radialer Richtung variierenden Kontur eines Spaltbereichs (20.2L) einer Schaufelplattform eines Gitters in Umfangsrichtung in der druckseitigen Hälfte des Segmentes zwischen zwei benachbarten Schaufelvorderkanten oder in der saugseitigen Hälfte des Segmentes zwischen zwei benachbarten Schaufelhinterkanten des Gitters angeordnet ist.

7. Turbomaschinenstufe nach einem der vorhergehenden Ansprüche, **dadurch gekennzeichnet, dass** eine maximale Variation ($R_{max}20$; $R_{min}20$) in radialer Richtung eines Spaltbereichs einer Schaufelplattform eines Gitters höchstens 50%, insbesondere höchstens 40% der Schaufelteilung des Gitters beträgt.

8. Turbomaschinenstufe nach einem der vorhergehenden Ansprüche, **dadurch gekennzeichnet, dass** eine extremale Erstreckung ($A_{max}10$, $A_{max}20$) einer in axialer Richtung variierenden Kontur eines Spaltbereichs in Umfangsrichtung im Bereich einer Schaufelkante, insbesondere nicht weiter als 25% der Schaufelteilung von der Schaufelkante entfernt, angeordnet ist.

9. Turbomaschinenstufe nach einem der vorhergehenden Ansprüche, **dadurch gekennzeichnet, dass** eine maximale Variation ($A_{max}10$, $A_{max}20$) in axialer Richtung eines Spaltbereichs einer Schaufelplattform eines Gitters höchstens 50%, insbesondere höchstens 40% der Schaufelteilung des Gitters beträgt.

10. Turbomaschine, insbesondere Gasturbine, vorzugsweise Flugtriebwerk-Gasturbine, mit wenigstens einer Turbomaschinenstufe, insbesondere einer Kompressor- oder Turbinenstufe, nach einem der vorhergehenden Ansprüche.

**Claims**

1.  Turbomachine stage having stator blades (1), radially inner and radially outer blade platforms, which together form a stator cascade, and having rotor blades (2), radially inner and radially outer blade platforms, which together form a rotor cascade adjacent to the stator cascade, radially outer blade platforms comprising cascade regions (10.1,20.1) which extend between blades that are adjacent in the circumferential direction, and the radially outer blade platforms also comprising gap regions (10.2L, 10.2T, 20.2L, 20.2T) which radially and/or axially delimit an axial gap (A) that extends axially between the stator cascade and rotor cascade,
    **characterized in that**
    two radially opposite contours of one of these gap regions (10.2L, 20.2T) of the radially outer blade platforms vary identically and in parallel in the radial direction over the circumference, so that the wall thickness of this gap region of the blade platform remain s constant.

2.  Turbomachine stage according to claim 1, **characterized in that** a contour of at least one of the gap regions varies in the radial and/or axial direction over the circumference, in particular periodically.

3.  Turbomachine stage according to eitherclaim 1 or claim 2, **characterized in that** a contour of a gap region (10.2T) of a blade platform of one of either the stator cascade and rotor cascade and a contour, axially and/or radially opposing this contour, of a gap region (20.2L) of a blade platform of the other of eitherthe stator cascade and rotor cascade vary over the circumference, in particular identically.

4.  Turbomachine stage according to any of the preceding claims, **characterized in that** a radial variation of a contour of a gap region of a blade platform of a cascade varies or is constant in the axial direction.

5.  Turbomachine stage according to any of the preceding claims, **characterized in that** a gap region (20.2L) of a blade platform of a cascade of which the contour varies over the circumference transitions smoothly into the cascade region (20.1) of the blade platform of which the contour varies in the radial and/or axial direction over the circumference.

6.  Turbomachine stage according to any of the preceding claims, **characterized in that** an extreme extension ($R_{max}20$; $R_{min}20$) of a contour, varying in the radial direction, of a gap region (20.2L) of a blade platform of a cascade in the circumferential direction is arranged in the pressure-side half of the segment between two adjacent blade leading edges or in the suction-side half of the segment between two adjacent blade trailing edges of the cascade.

7.  Turbomachine stage according to any of the preceding claims, **characterized in that** a maximum variation ($R_{max}20$; $R_{min}20$) in the radial direction of a gap region of a blade platform of a cascade is at most 50%, in particular at most 40%, of the blade pitch of the cascade.

8.  Turbomachine stage according to any of the preceding claims, **characterized in that** an extreme extension ($A_{max}10$, $A_{max}20$) of a contour, varying in the axial direction, of a gap region in the circumferential direction is arranged in the region of a blade edge, in particular no further than 25% of the blade pitch from the blade edge.

9.  Turbomachine stage according to any of the preceding claims, **characterized in that** a maximum variation ($A_{max}10$, $A_{max}20$) in the axial direction of a gap region of a blade platform of a cascade is at most 50%, in particular at most 40%, of the blade pitch of the cascade.

10. Turbomachine, in particular a gas turbine, preferably an aircraft gas turbine, comprising at least one turbomachine stage, in particular a compressor stage or turbine stage, according to any of the preceding claims.

**Revendications**

1.  Étage de turbomachine comportant des aubes directrices (1), des plates-formes d'aubes radialement intérieures et radialement extérieures qui forment ensemble une grille directrice, et comportant des aubes mobiles (2), des plates-formes d'aubes radialement intérieures et radialement extérieures qui forment ensemble une grille mobile adjacente à la grille directrice, des plates-formes d'aubes radialement extérieures présentant des zones de grille (10.1,20.1), lesquelles s'étendent entre des aubes adjacentes dans la direction circonférentielle, et les plates-formes d'aubes radialement extérieures présentant également des zones d'espacement (10.2L, 10.2T, 20.2L, 20.2T) qui délimitent radialement et/ou axialement un espacement axial (A), lequel s'étend axialement entre la grille directrice et la grille mobile,

**caractérisé en ce que**

deux contours radialement opposés de l'une de ces zones d'espacement (10.2L, 20.2T) des plates-formes d'aubes radialement extérieures varient de la même manière et parallèlement dans la direction radiale sur la circonférence, de sorte que l'épaisseur de paroi de cette zone d'espacement de la plate-forme d'aubes reste constante.

2. Étage de turbomachine selon la revendication 1, **caractérisé en ce qu'**un contour d'au moins une des zones d'espacement varie dans la direction radiale et/ou axiale sur la circonférence, en particulier de manière périodique.

3. Étage de turbomachine selon la revendication 1 ou 2, **caractérisé en ce qu'**un contour d'une zone d'espacement (10.2T) d'une plate-forme d'aubes de l'une parmi la grille directrice et la grille mobile, et un contour, axialement et/ou radialement opposé audit contour, d'une zone d'espacement (20.2L) d'une plate-forme d'aubes de l'autre parmi la grille directrice ou la grille mobile, varient sur la circonférence, en particulier de la même manière.

4. Étage de turbomachine selon l'une des revendications précédentes, **caractérisé en ce qu'**une variation radiale d'un contour d'une zone d'espacement d'une plate-forme d'aubes d'une grille varie ou est constante dans la direction axiale.

5. Étage de turbomachine selon l'une des revendications précédentes, **caractérisé en ce qu'**une zone d'espacement (20.2L) d'une plate-forme d'aubes d'une grille, dont le contour varie sur la circonférence, se confond de manière plate dans la zone de grille (20.1) de la plate-forme d'aubes, dont le contour varie au moins en sections sur la circonférence dans la direction radiale et/ou axiale.

6. Étage de turbomachine selon l'une des revendications précédentes, **caractérisé en ce qu'**une extension extrême ($R_{max}20$; $R_{min}20$) d'un contour, lequel varie dans la direction radiale, d'une zone d'espacement (20.2L) d'une plate-forme d'aubes d'une grille est disposée dans la direction circonférentielle dans la moitié côté refoulement du segment entre deux bords d'attaque d'aubes adjacents ou est disposée dans la moitié côté aspiration du segment entre deux bords de fuite d'aubes adjacents de la grille.

7. Étage de turbomachine selon l'une des revendications précédentes, **caractérisé en ce qu'**une variation maximale ($R_{max}20$; $R_{min}20$) dans la direction radiale d'une zone d'espacement d'une plate-forme d'aubes d'une grille est d'au plus 50 %, en particulier d'au plus 40 % du pas d'aubes de la grille.

8. Étage de turbomachine selon l'une des revendications précédentes, **caractérisé en ce qu'**un prolongement extrême ($A_{max}10$, $A_{max}20$) d'un contour, lequel varie dans la direction axiale, d'une zone d'espacement est disposé dans la direction circonférentielle dans la zone d'un bord d'aubes, en particulier ledit prolongement extrême ne se trouve pas à une distance du bord d'aubes de plus de 25 % du pas d'aubes.

9. Étage de turbomachine selon l'une des revendications précédentes, **caractérisé en ce qu'**une variation maximale ($A_{max}10$, $A_{max}20$) dans la direction axiale d'une zone d'espacement d'une plate-forme d'aubes d'une grille est d'au plus 50 %, en particulier d'au plus 40 % du pas d'aubes de la grille.

10. Turbomachine, en particulier turbine à gaz, de préférence turbine à gaz de moteur d'aéronef, comportant au moins un étage de turbomachine, en particulier un étage de compresseur ou de turbine, selon l'une des revendications précédentes.

Fig. 1

A_max20

A

A_max10

10.1

1

1

10.2T

20.1

20.2L

2

2

2.1

EP 2 607 625 B1

Fig. 2A

Fig. 2B

Fig. 3

10.2LS

10.1

1

10.2LM

10.2LM

A

20.2T

10.2LM

20.1

2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2372102 A2

- EP 1515000 A1